# EUROPEAN PATENT APPLICATION

(11) **EP 2 101 287 A1**
(43) Date of publication of application: **16.09.2009**
(21) Application number: 09154105.2
(22) Date of filing: 02.03.2009
(51) Int. Cl.: G06K 19/07

(54) **Active RFID tag**

(30) Priority: 10.03.2008 KR 20080021923
(71) Applicant: LS Industrial Systems Co., Ltd, Gyeonggi-do 431-080 (KR)
(72) Inventor: Kim, Jong Soo, 152-814, Seoul (KR)
(74) Representative: Löfgren, Bengt Håkan Alpo

(57) **Abstract**

An active RFID tag and a method using the same are disclosed, wherein the active RFID tag comprises: an RF signal detecting unit detecting a wake-up signal included in an RF signal; an RF transceiver transmitting a response signal corresponding to the RF signal; and a control unit controlling the RF transceiver and the REF signal detecting unit according to a detected result of the wake-up signal.

## Description

### CROSS-REFERENCE TO RELATED APPLICATIONS

The present invention claims priority of Korean patent application number 10-2008-0021923, filed on March 10, 2008, which are incorporated by reference in its entirety.

### BACKGROUND OF THE INVENTION

### Field of the Invention

The present invention relates to a Radio Frequency Identification (hereinafter RFID) tag and particularly, to an active RFID tag capable of reducing power consumption.

### Description of the Related Art

A typical RFID system generally includes an RED reader with deciphering function, an RFID tag having tag information, operating software, and network devices.

The RFID reader transmits a Ref (Radio Frequency) signal for recognizing an RFID tag through an antenna. The RFID tag receives the REF signal transmitted by the RFID reader. The RFID tag transmits a response signal including the tag information in response to the received RF signal through the antenna. The RFID reader captures the tag information of the response transmitted by the RFID tag.

Generally, the RFID tag includes a transponder chip manufactured with semiconductor technology, and an antenna. The RFID tag is classified into an active RFID tag and a passive RFID tag according to how an internal power supplied. The passive RFID tag without an internal power supplier is energized by an electromagnetic field of the RF signal transmitted by the RFID reader. The active RFID tag receives power required from an embedded power supplier. Thus, in order to extend a usable period of the active RFID tag, it is essential to reduce power consumption of the power supplier in the active RFID tag.

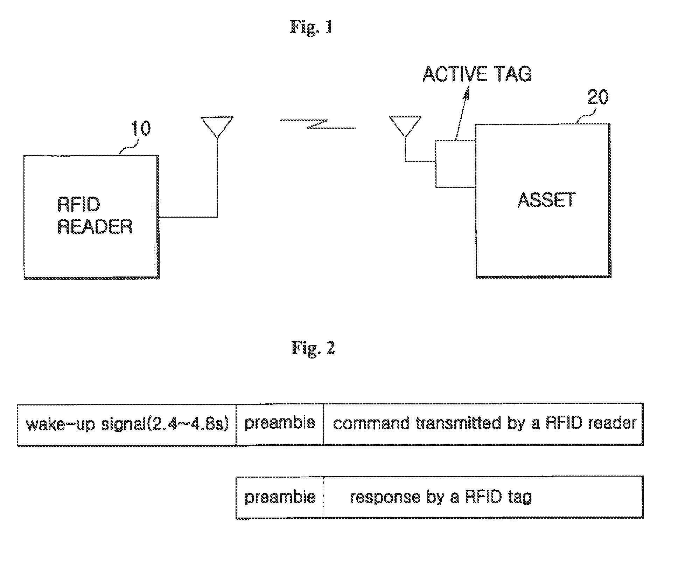

FIG. 1 is a block diagram of an RFID system with an active RFID tag. As shown, the RFID system includes an RFID reader 10 and a active RFID tag. The communication between the RFID reader and the active RFID tag is wirelessly implemented in wireless communication. The active RFID tag is attached to an asset 20 to be managed, wheredata related to information or position of the asset is responded according to a command transmitted by the RFID reader.

FIG. 2 is a message configuration of an RF signal for the active RFID tag in FIG.1. The RFID reader typically starts to communicate with the RFID tags. The active RFID tag is placed in a sleep mode for the most part of the period in which the active RFID tag does not communicate with the RFID reader in order to minimize power consumption of the active RFID tag. The RFID reader transmits a wake-up signal prior to a data signal having a message where the wake-up signal is typically maintained for 2.4 to 4.8 seconds (hereinafter referred to a S). The active RFID tag in the sleep mode is converted in response to the wake-up signal to active mode that can receive an RF signal having a message by the RFID reader. After the active RFID tag recognizes the wake-up signal, the active RFID tag is first converted to be in active mode to detect the RF signal that includes the message by the RFID reader. Then, after the active RFID tag transmits a response corresponding to the RF signal of the RFID reader, and the active RFID tag returns to the sleep mode.

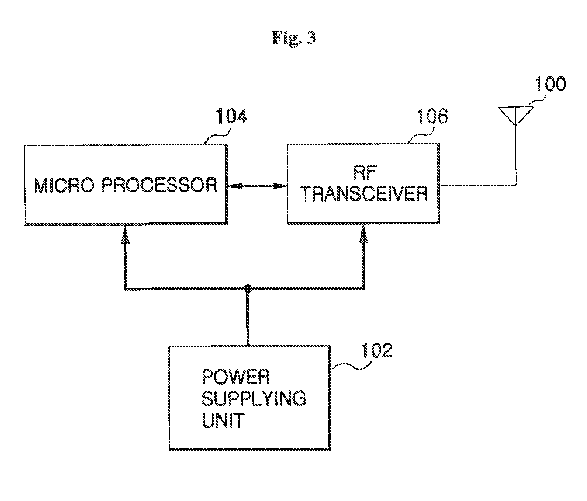

FIG. 3 is a block diagram of a conventional active RFID tag. As shown, the conventional active RFID tag includes an antenna 100, a power supplying unit 102, a microprocessor 104, and an RF transceiver 106. The active RFID tag has the power supplying unit 102, i.e., a battery, and each block of the active RFID tag receives required power from the battery.

The microprocessor 104 controls the RF transceiver 106 to be placed in an active mode for each predetermined period. Generally, the RF transceiver is placed in the active mode at every period of 2.4 to 4.8s. Since the RFID reader transmits a wake-up signal which is maintained for at least 2.4s to turn the active RFID tag from sleeping mode to active mode, the REF transceiver 106 can receive the wake-up signal from the RFID reader.

The RF transceiver 106 which is controlled by the microprocessor 104 receives an RF signal through the antenna 100 from the FRID reader in an active mode and checks whether the received RF signal includes an effective wake-up signal. If the received RF signal includes the effective wake-up signal, the RF transceiver 106 analyzes the received RF signal. According to the analyzing result, the RF transceiver 106 transmits a response corresponding to the RF signal through the antenna 100 to the RFID reader.

In detail, the RFID reader initially transmits a wake-up signal for at least 2.4s, and then transmits a preamble signal to determine a communication protocol, and finally transmits a command signal that requires tag information in the active RFID tag. If there is no wake-up signal received through the antenna 100, the microprocessor 104 returns to the sleep mode where the transceiver 106 is also placed in the sleep mode. The transceiver 106 of active RFID tag is placed in the active mode by control of the microprocessor 104. If the transceiver 106 receives a wake-up signal through the antenna 100 from the RFID reader, the transceiver 106 successively receives a preamble signal to determine communication protocol between the active RFID tag and the RFID reader. Then, the active RFID tag transmits a response including tag information of itself in response to the command signal which is successively received. The RF signal includes the wake-up signal, the preamble signal, and the command signal.

As described above, the transceiver 106 and the microprocessor 104 of the active RFID tag have to be turned to active mode from sleeping mode at every predetermined period in order to capture the wake-up signal The current consumption caused by turns of operating mode of the transceiver 106 and the microprocessor 104 comes to occupy about 50% of a total current consumption. Thus, the total current consumption of the active RFID tag cannot be reduced because of frequent turns of the operating mode of the transceiver 106 and the microprocessor 104.

### SUMMARY OF THE INVENTION

According to some exemplary implementations, there is an active RFID tag capable of minimising power consumption.

In one general aspect of the present disclosure, there is provided an active RFID tag, comprising: an RF signal detecting unit operated in response to an active signal for detecting an RF signal received through an antenna; a comparator for comparing a signal level of the detected RF signal with a predetermined signal level; a microprocessor generating the active signal and a switching control signal according to the comparison result of the comparator; an RF transceiver transmitting a response signal corresponding to the RF signal through the antenna; and a switching unit connecting the antenna with the RF transceiver or the RF signal detecting unit in response to the switching control signal.

In another general aspect of the present disclosure, there is provided an active RFID tag, comprising: an RF signal detecting unit detecting a wake-up signal included in an RF signal; an RF transceiver transmitting a response signal corresponding to the RF signal; and a control unit controlling the RF transceiver and the RF signal detecting unit according to the detecting result of the wake-up signal. The active RFID tag further comprises a switching unit transmitting the RF signal received through an antenna to the RF signal detecting unit or the RF transceiver according to control of the control unit. The control unit controls the switching unit for connecting the antenna to the RF transceiver after the wake-up signal is detected. The control unit controls the switching unit to connect the antenna with the RF signal detecting unit after the RF transceiver transmits the response signal. The control unit controls the RF signal detecting unit to implement operation of detecting the wake-up signal for a predetermined period which is less than an input period of the RF signal. The active RFID tag further comprises a comparator comparing a signal level of the detected RF signal with a predetermined signal level and transmitting a comparison result to the control unit.

In stillanother general aspect of the present disclosure, there is provided an active RFID tag, comprising: an RF transceiver transmitting a response signal corresponding to an RF signal received through an antenna; and a sleeping mode escaping unit controlling the RF signal detecting unit to escape from a sleeping mode according to whether a wake-up signal included in the RF signal has been detected. The active RFID tag further comprises a switching unit connecting the antenna with the RF signal detecting unit or the RF transceiver. The sleeping mode escaping unit includes a wake-up signal detecting unit for detecting the wake-up signal included in the RF signal; and a control unit controlling the switching unit, the RF transceiver and the wake-up signal detecting unit according to a detected result of the wake-up signal detecting unit.

In still further another general aspect of the present disclosure, there is provided a method for operating an Active RFID tag, comprising: detecting a wake-up signal included in an RF signal; escaping from a sleeping mode according to the detected result of the wake-up signal detecting unit; and transmitting a response signal corresponding to the RF signal. The operation of the detecting a wake-up signal is implemented for a predetermined period which is less than an input period of the RF signal.

### BRIEF DESCRIPTION OF THE DRAWINGS

FIG. 1 is a block diagram of an RFID system with an active RFID tag.

FIG. 2 is the message configuration of an RF signal for the active RFID tag in FIG. 1.

FIG. 3 is a block diagram of a conventional active RFID tag.

FIG. 4 is a block diagram of a first exemplary implementation according to the present invention.

FIG. 5 illustrates flowcharts for operation of a conventional active RFID tag and that of an active RFID tag according to the present invention.

FIG. 6 is a table for comparing a current consumption of the conventional active RFID tag with that of the active RFID tag according to the present invention.

FIG. 7 is a block diagram of a second exemplary implementation according to the present invention.

### DESCRIPTION OF SPECIFIC EMBODIMENTS

Exemplary implementations of the present disclosure will be described with reference to the accompanying drawings.

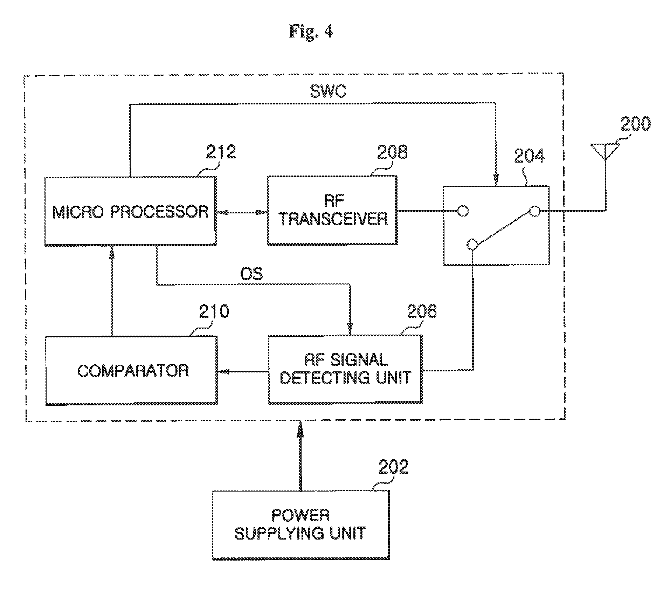

FIG. 4 is a block diagram of a first exemplary implementation according to the present invention. As shown, an active RFID tag includes an antenna 200, a switching unit 204, an RF signal detecting unit 206, an RF transceiver 208, a comparator 210, a microprocessor 212, and a power supplying unit 202, i.e., a battery. Power required for operating each block 204, 206, 208, 212, and 210 is supplied from the power supplying unit 202.

The switching unit 204 transmits an RF signal received through the antenna 200 to the RF signal detecting unit 206 or the RF transceiver 208 in response to a switching control signal SWC. The switching unit 204 is connected to the RF signal detecting unit 206 at an initial setting time, and in turn connected to the RF transceiver 208 in response to the switching control signal SWC.

The RF signal detecting unit 206 receives an RF signal received through the antenna 200 in response to an active signal OS from the microprocessor 212. The RF signal includes a wake-up signal for turning a mode of the active RFID tag from a sleep mode to an active mode. The RF signal detecting unit 206 detects the wake-up signal included in the RF signal in response to the active signal OS for a predetermined period which is less than 1ms. That is, the detecting operation of the RF signal detecting unit 206 is implemented for a short period. Thus, the power consumption is relatively low for detecting whether the RF signal includes an effective wake-up signal.

After the RF signal detecting unit 206 detects the wake-up signal, the RF transceiver 208 analyzes the RF signal received through the antenna 200 and transmits a response corresponding to the analytical result to an RFID reader through the antenna 200. The RF transceiver 208 is operated only if the RF signal detecting unit detects the wake-up signal in the RF signal. As described, the RF signal may include the wake-up signal, a preamble signal, and a command signal. If the analytical result of the RF signal by the RF transceiver 208 indicates that the RF signal includes the preamble signal, communication protocol is determined between the RFID reader and the active RFID tag. If the RF signal includes a command signal which requires tag information, the RF transceiver 208 generates a response corresponding to the command signal and transmits the response through the antenna 200.

The comparator 200 compares the RF signal detected by the RF signal detecting unit with a predetermined signal to generate an interrupt signal to the microprocessor 212. The comparator 200 compares a signal level of the detected RF signal with that of the predetermined signal. If the signal level of the detected RF signal is higher than that of the predetermined signal, the comparator 200 generates the interrupt signal. Both of the comparator 200 and the RF signal detecting unit implements the detection of the wake-up signal.

The microprocessor 212 escapes from sleep mode at every predetermined period, and generates the active signal OS which is maintained shortly for a short period, e.g., 1ms or less to transmit it to the RF signal detecting unit 206. For example, the predetermined period may be 2s. The wake-up signal of the RF signal generated by the RFID reader is maintained for at least 2.4S. Thus, if the RF signal detecting unit 206 is operated at every 2s, the wake-up signal may be detected by the RF signal detecting unit 206.

The microprocessor 212 recognizes that the RF signal includes an effective wake-up signal according to the comparison result of the comparator 200 and then, generates the switching control signal SWC for connecting the switching unit 204 to the RF transceiver 208. After the RF transceiver 208 is connected to the switching unit 204, the RF transceiver 208 is operated in active mode.

The microprocessor 212 generates the switching control signal SWC after the RF transceiver 208 transmits the response corresponding to the command signal. The switching unit 204 is connected by the switching control signal SWC to the RF signal detecting unit 206. Then, the microprocessor 212 is placed in a sleeping mode and the RF signal detecting unit 206 is ready for detecting a wake-up signal included in the RF signal.

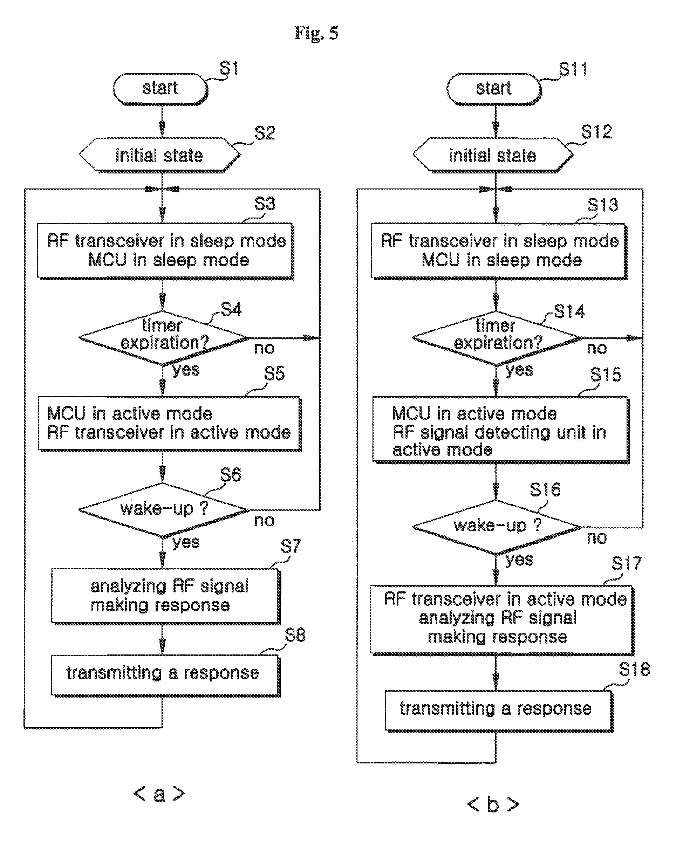

FIG. 5 illustrates flowcharts for operation of a conventional active RFID tag and that of an active RFID tag according to the present invention. First, a microprocessor of a conventional active RFID tag is escaped from sleep mode with a timer in the microprocessor at every predetermined period. The microprocessor controls an RF transceiver to be placed in active mode. (Referring to S1 to S5 of
<a>) The RF transceiver detects a wake-up signal in an RF signal and transmits a response corresponding to the RF signal. (Referring to S6 to S8) Since the microprocessor cannot control the RF transceiver in the sleep mode and the RF transceiver should be controlled by the microprocessor in order to receive the RF signal, the microprocessor should escape from the sleep mode before the RF transceiver receives the RF signal.

Meanwhile, a microprocessor of an active RFID tag according to the present invention also escapes from sleep mode with a timer in the microprocessor at every predetermined period. However, a transceiver according to the embodiment of the present invention needs no escape from sleeping mode at a stage of detecting a wake-up signal. The microprocessor controls only an RF signal detecting unit at the stage of detecting the wake-up signal. (Referring to S11 to S 15 of <b>) After The RF signal detecting unit detects the wake-up signal, the microprocessor controls the switching unit to be connected to the RF signal transceiver, and the RF signal transceiver to be placed in active mode. The RF signal transceiver transmits a response signal corresponding to an RF signal including the wake-up signal. (Referring to S 16 to S 18 of <b>)

Considering an active RFID tag in a typical RFID system, in order to capture a wake-up signal in an RF signal from the RFID reader, the operation for escaping from sleeping mode and returning to sleeping mode at every predetermined period have to be implemented more frequently than the operation for making a response in response to the RF signal from the RFID reader. Since the active RFID tag according to the present invention can reduce the number of times for the transceiver to escape from sleeping mode, the power consumption of the active RFID tag can be decreased.

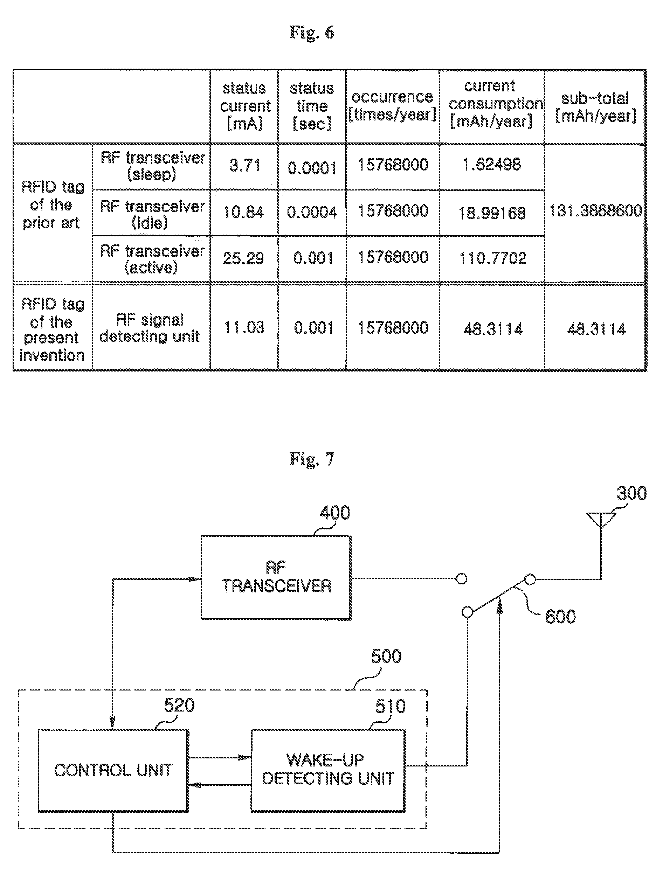

FIG. 6 is a table for comparing a current consumption of the conventional active RFID tag with that of the active RFID tag according to the present invention. The conventional RF transceiver should have an idle mode in order to return to an active mode for receiving an RF signal from an sleeping mode. That is, the idle mode is an intermediate stage between sleeping mode and active mode, Because transition time is required to change operating modes of RF typical transceiver, the conventional RF transceiver need more time than is required to receive the wake-up signal although time to detect a wake-up signal is very short, i.e., 1ms. Thus, the conventional active RFID tag generally consumes more power than that needed for receiving an RF signal,

The active RFID tag according to the present invention operates the RF signal detecting unit to detect a wake-up signal with the RF transceiver keeping in sleep mode. Thus, The active RFID tag according to the present invention is more profitable than the conventional active RFID tag in terms of power consumption and time to detect a wake-up signal.

If the total power consumption of the conventional active RFID tag is compared with that of the active RFID tag according to the present invention for about 1 year in a case that the RF transceiver detects a wake-up signal at every 2s and returns to sleep mode, it is recognized in FIG. 6 that the total power consumption of the active RFID tag is only 37 % in comparison with the conventional active RFID tag.

FIG. 7 is a block diagram of a second exemplary implementation according to the present invention.

As shown, an active RFID tag according to a second exemplary implementation includes an RF transceiver 400 transmitting a response corresponding to an RF signal received through an antenna 300; and a sleeping mode escaping unit 500 controlling the RF signal detecting unit to escape from a sleeping mode according to whether a wake-up signal included in the RF signal is detected. The active RFID tag further includes a switching unit 600 connecting the antenna with the RF signal detecting unit 500 or the RF transceiver 400.

The sleeping mode escaping unit 500 includes a wake-up signal detecting unit 510detecting the wake-up signal included in the RF signal; and a control unit 520 to control the switching unit 600, the RF transceiver 400 and the wake-up signal detecting unit 510 according to a detected result of the wake-up signal detecting unit 520.

The method for operating an active RFID tag in FIG. 7 is as following: first, the wake-up signal detecting unit 510 detects a wake-up signal included in an RF signal; second, the RF transceiver 400 escapes from a sleeping mode according the detecting result of the wake-up signal detecting unit; and finally, the RF transceiver 400 transmits a response signal corresponding to the RF signal through the antenna 300. Herein, operation of the detecting a wake-up signal is implemented for a predetermined period which is less than an input period of the RF signal.

The control unit 520 may functionally correspond to the microprocessor 212 in FIG. 4, the wake-up detecting unit 510 may functionally correspond to the RF signal detecting unit in FIG. 4, and the switching unit 600 may correspond to the switching unit 204. Because operations of corresponding units are substantially similar to each other, detailed description thereto is omitted.

While the present disclosure has been described with respect to the specific exemplary implementations, it will be apparent to those skilled in the art that various changes and modifications may be made without departing from the spirit and scope of the disclosure as defined in the following claims.

## Claims

1. An active RFID tag, comprising:
An RF signal detecting unit operated in response to an active signal and to detect an RF signal received through an antenna;
a comparator comparing a signal level of the detected RF signal with a predetermined signal level;
a microprocessor generating the active signal and a switching control signal according to the comparison result of the comparator;
an RF transceiver transmitting a response signal corresponding to the RF signal through the antenna; and
a switching unit connecting the antenna with the RF transceiver or the RF signal detecting unit in response to the switching control signal.

2. The active RFID tag of claim 1, wherein the microprocessor recognizes that the RF signal includes an effective wake-up signal if the signal level of the RF signal is more than a predetermined signal level.

3. The active RFID tag of claim 1, wherein if the RF signal includes command information, the response signal includes RFID tag information corresponding to the command information.

4. The active RFID tag of claim 3, wherein the microprocessor controls the switching unit to connect the antenna with the RF signal detecting unit after the RF transceiver transmits the response signal.

5. The active RFID tag of claim 1, wherein the microprocessor generates the active signal to activate the RF signal detecting unit for a predetermined period at every predetermined time.

6. The active RFID tag of claim 1, wherein the antenna is connected with the RF signal detecting unit by the switching unit at an initial setting time.

7. An active RFID tag, comprising:
an RF signal detecting unit detecting a wake-up signal included in an RF signal;
an RF transceiver transmitting a response signal corresponding to the RF signal; and
a control unit controlling the RF transceiver and the RF signal detecting unit according to the detected result of the wake-up signal.

8. The active RFID tag of claim 8, further comprising a switching unit transmitting the RF signal received through an antenna to the RF signal detecting unit or the RF transceiver according to control of the control unit.

9. The active RFID tag of claim 9, wherein the control unit controls the switching unit to connect the antenna to the RF transceiver after the wake-up signal is detected.

10. The active RFID tag of claim 10, wherein the control unit controls the switching unit to connect the antenna with the RF signal detecting unit after the RF transceiver transmits the response signal.

11. The active RFID tag of claim 11, wherein the control unit controls the RF signal detecting unit to implement operation for detecting the wake-up signal for a predetermined period which is less than an input period of the RF signal.

12. The active RFID tag of claim 8, further comprising a comparator for comparing a signal level of the detected RF signal with a predetermined signal level to transmit the comparison result to the control unit.

13. An active RFID tag, comprising:
an RF transceiver transmitting a response signal corresponding to an RF signal received through an antenna; and
a sleeping mode escaping unit controlling the RF signal detecting unit to escape from a sleeping mode according to whether a wake-up signal included in the RF signal is detected.

14. The active RFID tag of claim 14, further comprising a switching unit connecting the antenna with the sleeping mode escaping unit or the RF transceiver.

15. The active RFID tag of claim 15, wherein the sleeping mode escaping unit comprises:
a wake-up signal detecting unit to detect the wake-up signal included in the RF signal; and
a control unit controlling the switching unit, the RF transceiver and thewake-up signal detecting unit according to the detected result of the wake-up signal detecting unit.
